# EUROPEAN PATENT APPLICATION

(11) **EP 4 738 784 A1**
(43) Date of publication of application: **06.05.2026**
(21) Application number: 25211947.4
(22) Date of filing: 29.10.2025
(51) Int. Cl.: H04L 47/11, H04L 47/20, H04L 47/22

(54) **NETWORK INTERFACE DEVICES FOR USER-DEFINED CONGESTION CONTROL**

(30) Priority: 30.10.2024 US 202418931952
(71) Applicant: Avago Technologies International Sales Pte. Limited, Singapore 768923 (SG)
(72) Inventor: Wai, Eddie Ki-Man, Rowland Heights, 91748 (US); Shah, Hemal Vinodchandra, Trabuco Canyon, 92679 (US)
(74) Representative: Dilg, Haeusler, Schindelmann Patentanwaltsgesellschaft mbH

(57) **Abstract**

Example methods and network interface devices for congestion control are described. In one example, a network interface device may include a first processing layer and a second processing layer. The first processing layer may receive an event notification from the second processing layer. In response to determination that congestion control is required based on the event notification, the first processing layer may determine an adjustment to a packet forwarding parameter by applying a congestion control algorithm. The congestion control algorithm may be one of multiple congestion control algorithms that the first processing layer is programmable to apply. The first processing layer may generate and send an instruction to the second processing layer to perform the adjustment. Based on the instruction, the second processing layer may configure a component to control packet forwarding towards a physical network based on the second value of the packet forwarding parameter.

## Description

### BACKGROUND

Network congestion generally occurs when traffic volume exceeds the capacity of a network environment, leading to reduced data transfer speeds, increased latency and potential packet loss, etc. In practice, controlling network congestion may be challenging due to various factors. First, the dynamic and unpredictable nature of network traffic in different network environments may make it difficult to anticipate and manage congestion effectively. Also, a diverse range of applications, each having their own bandwidth requirements, often share a network environment. For example, bandwidth-intensive applications, such as video streaming, online gaming and distributed training of artificial intelligence (AI) models, may cause traffic spikes and exacerbate network congestion. It is therefore desirable to implement congestion control to improve network performance.

### SUMMARY

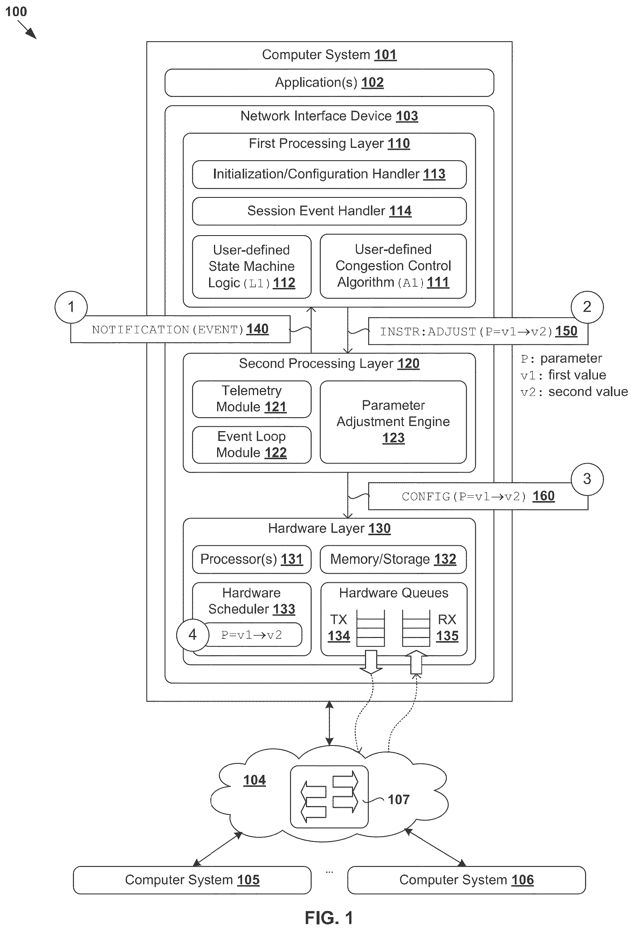

According to examples of the present disclosure, network interface devices may be configured to perform congestion control based on any suitable user-defined congestion control algorithm(s). In one aspect, examples of the present disclosure provide a network interface device (see 103 in FIG. 1) that includes a processor and a non-transitory computer-readable medium having stored thereon instructions that, when executed by the processor, cause the processor to implement a first processing layer and a second processing layer to perform congestion control (see 110-120 in FIG. 1).

In one example, the first processing layer may receive an event notification from the second processing layer. In response to determination that congestion control is required based on the event notification, the first processing layer may determine an adjustment to a packet forwarding parameter by applying a congestion control algorithm. The congestion control algorithm may be one of multiple congestion control algorithms that the first processing layer is programmable to apply. The first processing layer may generate and send an instruction to the second processing layer to perform the adjustment. Based on the instruction, the second processing layer may adjust the packet forwarding parameter from a first value to a second value, particularly by configuring a component (e.g., hardware scheduler) of the network interface device to control packet forwarding towards a physical network based on the second value. See 140-160 in FIG. 1.

Another aspect may include a non-transitory computer-readable storage medium that includes a set of instructions which, in response to execution by a processor of a network interface device, cause the processor to implement a first processing layer and a second processing layer to perform congestion control according to examples of the present disclosure. A further aspect may include a method for a network interface device that includes a first processing layer and a second processing layer to perform congestion control. Yet a further aspect may include a computer system that includes a network interface device according to examples of the present disclosure.

### BRIEF DESCRIPTION OF DRAWINGS

FIG. 1 is a schematic diagram illustrating an example network interface device to perform user-defined congestion control in a network environment.
FIG. 2 is a flowchart of an example process for a network interface device to perform user-defined congestion control in a network environment.
FIG. 3 is a flowchart of an example detailed process for a network interface device to perform user-defined congestion control in a network environment.
FIG. 4A is a schematic diagram illustrating a first example programming of the first processing layer in FIG. 1.
FIG. 4B is a schematic diagram illustrating a second example programming of the first processing layer in FIG. 1.
FIG. 5 is a schematic diagram illustrating a first processing layer applying user-defined rule(s) to determine whether to send a probe packet.
FIG. 6 is a schematic diagram illustrating an example rate-based congestion control algorithm that a first processing layer is programmable to apply.
FIG. 7 is a schematic diagram illustrating an example window-based congestion control algorithm that a first processing layer is programmable to apply.
FIG. 8 is a schematic diagram illustrating an example of user-defined congestion control algorithm that a first processing layer is programmable to apply.
FIG. 9 a schematic diagram illustrating an example distributed training environment in which a network interface device may be deployed to perform congestion control.
FIG. 10 is a schematic diagram illustrating an example software-defined networking (SDN) environment.

### DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented here. It will be readily understood that the aspects of the present disclosure, as generally described herein, and illustrated in the drawings, may be arranged, substituted, combined, and designed in a wide variety of different configurations, all of which are explicitly contemplated herein.

Although the terms "first" and "second" are used to describe various elements, these elements should not be limited by these terms. These terms are used to distinguish one element from another. For example, a first element may be referred to as a second element, and vice versa. As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C ," or alternatively, "at least one of A, at least one of B, and at least one of C," it is expressly described as such.

### Example network interface device

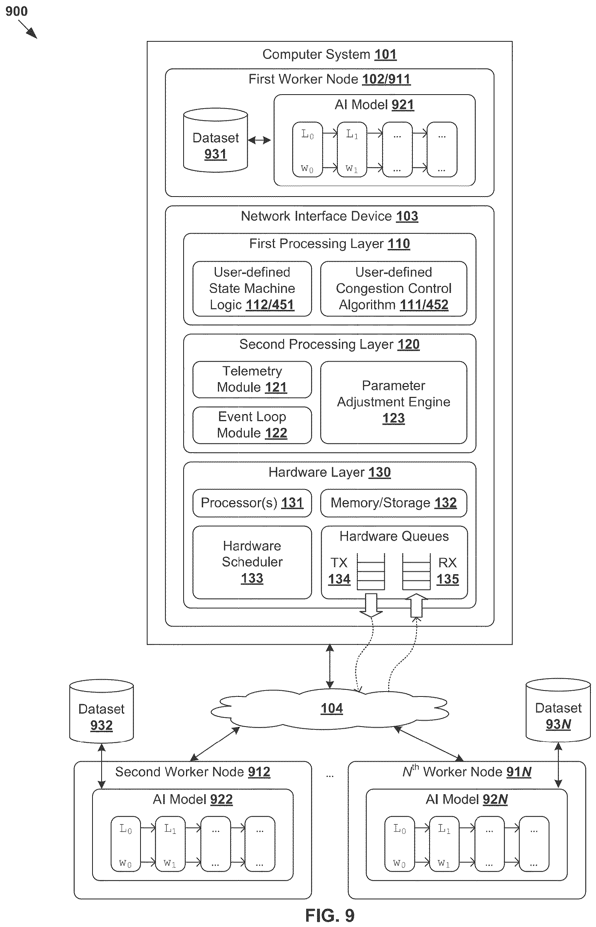

FIG. 1 is a schematic diagram illustrating example network interface device 103 to perform user-defined congestion control in network environment 100. Here, network environment 100 may include first computer system 101 that is capable of communicating with second computer systems 105-106 via physical network 104. Computer system 101 may implement any suitable application(s) 102 (one shown for simplicity). The term "application" may refer generally to any suitable software that is capable of running on computer system 101. Application 102 may be configured to perform any suitable task(s) or function(s) as a standalone application or as part of a larger suite of software. For example, application 102 may be implemented by a worker node in a distributed environment (see FIG. 9) for training an artificial intelligence (AI) model, etc.

To transfer data over physical network 104, computer system 101 may send and receive packets using network interface device 103. As used herein, the term "network interface device" may refer generally to any suitable device that is configured to interface or connect with a physical network to receive data from, and transmit data towards, the physical network. Network interface device 103 may include any software, firmware and/or hardware components to enable computer system 101 to exchange data with physical network 104. The term "physical network" may refer generally a network formed by multiple interconnected physical devices. The physical devices may include physical servers, physical routers, physical switches, any combination thereof, etc.

Network interface device 103 may be a standalone component (e.g., a card that plugs into a slot within computer system 101), or integrated with another component (e.g., motherboard) of computer system 101. In the example in FIG. 1, network interface device 103 may be referred to as a physical network interface controller (NIC). Depending on different network environments, network interface device 103 may be known as a "network adapter," "network interface card," "network interface unit," "Ethernet card," etc. In the following, various examples will be described using NIC 103.

In practice, it has been observed that no single congestion control algorithm is able to perform optimally across all types of network environment 100. Traffic characteristics and congestion conditions often vary from one network environment to another, making it challenging to react to and manage congestion effectively. To improve congestion control and network performance, examples of the present disclosure may be implemented to facilitate programming of a user-defined congestion control algorithm on NIC 103. This capability allows a user (e.g., network administrator) to develop and fine-tune their own congestion control algorithm on NIC 103 according to the specific requirements of network environment 100.

In the example in FIG. 1, NIC 103 may include multiple layers, such as first processing layer 110, second processing layer 120 and hardware layer 130. As used herein, the term "layer" may refer generally to one or more components that are configured to provide a set of functions or capabilities within NIC 103. For example, first processing layer 110 and second processing layer 120 may be implemented using software, firmware, hardware, or any combination thereof, etc. The term "software" may refer generally to programs, procedures or instructions that enable NIC 103 to perform examples of the present disclosure. The term "firmware" may refer generally to one type of software that may be, for example, embedded in hardware component(s) of NIC 103.

According to examples of the present disclosure, first processing layer 110 may be programmable or configurable to apply one of multiple user-defined congestion control algorithms, such as congestion control algorithm 111 (denoted as "A1"). User-defined congestion control algorithm 111 may specify user-defined formula(s) to determine an adjustment to a packet forwarding parameter as a measure of control congestion. First processing layer 110 may also include user-defined state machine logic 112 (more generally known as "user-defined logic"), which specifies rule(s) to determine an action (e.g., state transition) based on an input (e.g., event notification). For example, user-defined state machine logic 112 may determine whether to send telemetry packets (e.g., probe packets) for metric measurement immediately, or trigger a deferred action to send probe packets at a later time. Depending on the desired implementation, user-defined state machine logic 112 may also determine how to handle other events, such as congestion events, session events, etc. First processing layer 110 may further include any other module(s) or component(s), such as initialization/configuration handler 113, session event handler 114, etc.

As used herein, the term "congestion control" may refer generally to an approach for controlling the amount of data (e.g., packets) that flows through a network. For example, congestion control may be performed to reduce the number of data packets that are transmitted over physical network 104. The term "congestion control algorithm" may refer generally to steps or operations that may be performed to manage congestion. The term "user-defined state machine logic" or "user-defined logic" may refer generally to one or more rules for determining whether to perform an action (e.g., transition from one state to another state) based on an input (e.g., event notification). The term "packet" may refer generally to a group of bits that can be transported together, and may be in another form, such as "frame," "message," "segment," etc. The term "traffic" or "flow" may refer generally to multiple packets. A packet may be a data/control packet, etc.

The term "user-defined" may refer generally to functionalities that are specified or programmed by a user, rather than pre-configured or provided by a manufacturer or provider. The term "user" may refer generally to any suitable entity who is capable of programming first processing layer 110, such as a human user (e.g., network administrator, device customer), software application, AI agent, etc. The term "programmable to apply" may refer generally to first processing layer 110 being configured (e.g., using instructions executable by processor 131) to run or execute congestion control algorithm 111 and/or state machine logic 112.

Second processing layer 120 may represent a framework that is configured to support implementation of multiple congestion control algorithms that first processing layer 110 is programmable to apply. For example, second processing layer 120 may be configured to provide various supporting functions to allow any (compatible) first processing layer 110 to utilize hardware layer 130 for congestion control. In the example in FIG. 1, second processing layer 120 may include telemetry module 121 to provide a probe generation and handling function, event loop module 122 to provide an event detection and handling function, parameter adjustment engine 123 to provide a parameter adjustment function, datastore (not shown) to store session context information, etc.

**In** practice, first processing layer 110 may be referred to as a user-defined congestion control (UDCC) program, and second processing layer 120 as a UDCC framework. Here, first processing layer 110 may represent a programmable component that resides on top of the UDCC framework provided by second processing layer 120. As will be described further below, first processing layer 110 may control how events reported by second processing layer 120 are handled, and how packet forwarding parameter(s) may be adjusted. To facilitate interlayer communication, first processing layer 110 and second processing layer 120 may be configured to have shared interface (e.g., APIs) and/or shared event data structures.

Hardware layer 130 may include any suitable physical or hardware components, such as processor(s) 131, memory/storage device(s) 132 to store program code or instructions that are executable by processor(s) 131 to implement layers 110-120, hardware scheduler 133, hardware queues 134-135, etc. Processor(s) 131 may include an embedded central processing unit (eCPU), etc. Hardware layer 130 may include any hardwired circuitry, such as one or more application-specific integrated circuits (ASICs), programmable logic devices (PLDs), field-programmable gate arrays (FPGAs), etc. Here, the term "hardware scheduler" may refer generally to a hardware component that is configured to manage the timing and/or order of packet transmissions. For example, hardware scheduler 133 may operate at a hardware level to control how packets are queued and sent over physical network 104. Hardware queues may include transmit (TX) queue 134 to store egress (i.e., outgoing) packets to be transmitted by NIC 103 and receive (RX) queue 135 to store ingress (i.e., incoming) packets received by NIC 103. Processing and hardware layers 110-130 will be described further below.

### User-defined congestion control

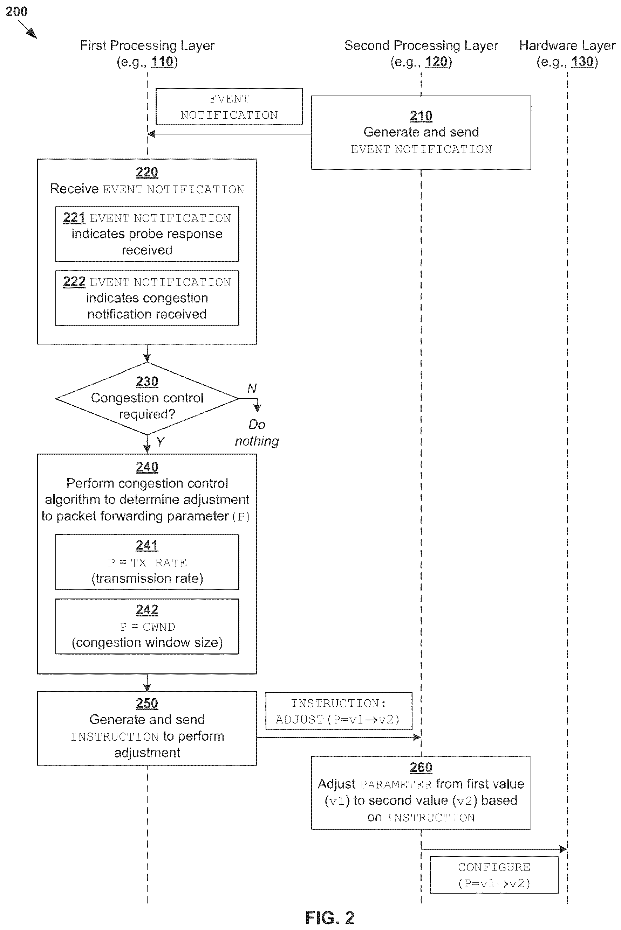

FIG. 2 is a flowchart of example process 200 for network interface device 103 to perform congestion control. Example process 200 may include one or more operations, functions, or actions illustrated by one or more blocks, such as 210 to 260. Depending on the desired implementation, various blocks may be combined into fewer blocks, divided into additional blocks, and/or eliminated. Examples of the present disclosure may be implemented using any suitable "network interface device," such as NIC 103 that is capable of interfacing with physical network 104, etc.

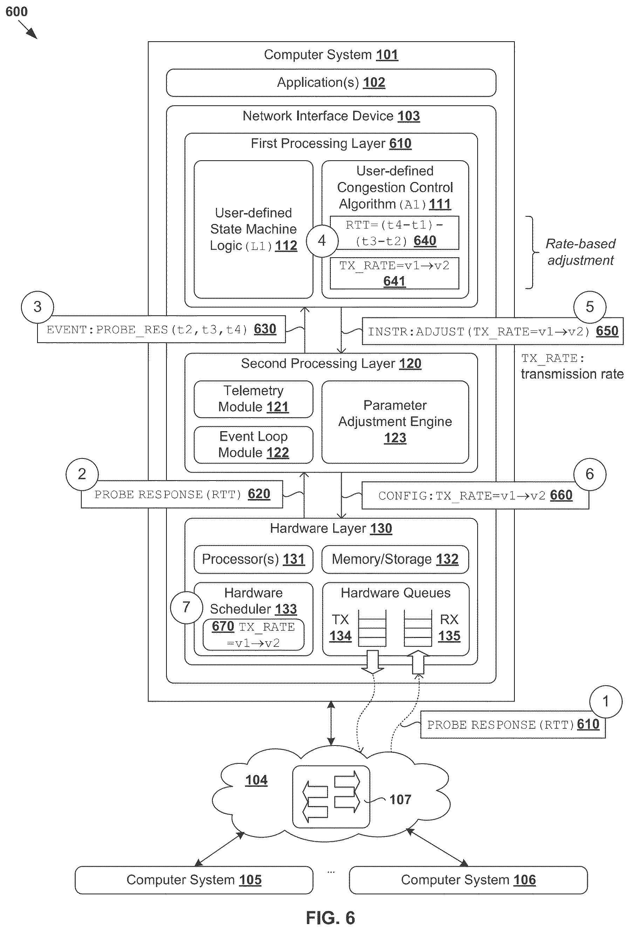

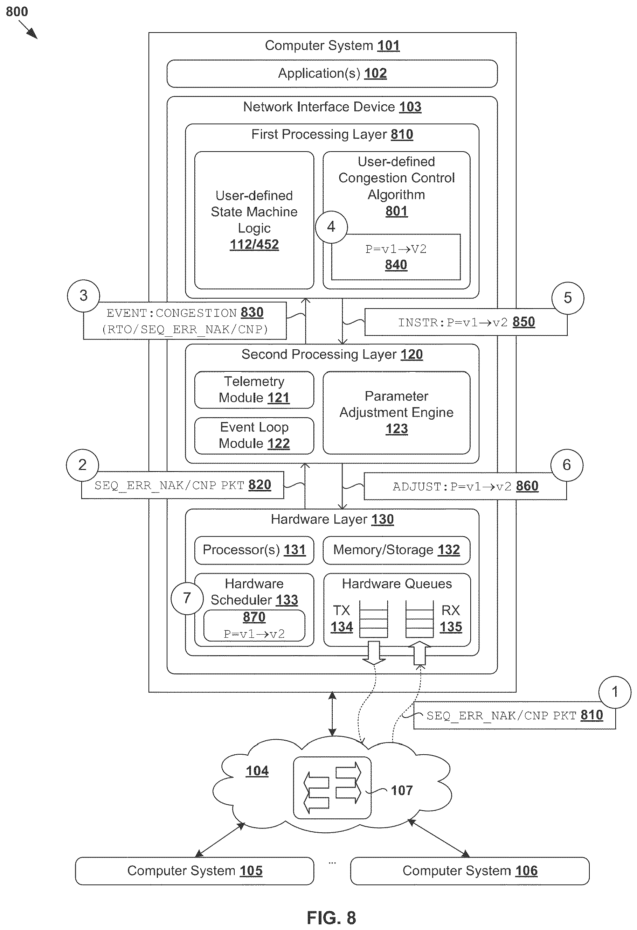

At 210-220 in FIG. 2, first processing layer 110 may receive an event notification (see 140 in FIG. 1) that identifies an event detected by second processing layer 120. In a first example (to be described using FIGs. 6-7), the event notification may indicate that a telemetry packet (e.g., probe response) for metric measurement has been received. In practice, metric measurement may be performed to implement a congestion control algorithm that is based on in-band telemetry (INT). In a second example (to be described using FIG. 8), the event notification may indicate that second processing layer 120 has detected at least one of the following congestion events: a retransmission timeout (RTO) event, a sequence error negative acknowledgement (NAK) event, and a congestion notification point (CNP) event. For example, the CNP event may be sent by a destination (e.g., second computer system 105/106) to signal congestion to a source (e.g., first computer system 101) to implement a congestion control algorithm that is based on explicit congestion notification (ECN). See also 221-222 in FIG. 2.

At 230-240 in FIG. 2, in response to determination that congestion control is required based on the event notification, first processing layer 110 may perform user-defined congestion control algorithm 111 to determine an adjustment to a packet forwarding parameter (P) from a first value (v1) to a second value (v2). As explained using FIG. 1, user-defined congestion control algorithm 111 may be one of multiple congestion control algorithms that first processing layer 110 is programmable to apply.

As used herein, the phrase "determination that congestion control is required" at block 230 should be interpreted broadly to include first processing layer 110 performing the determination based on any suitable information (e.g., metric information, an event, an instruction, a control signal, etc.) specified by, or derivable from, at least the event notification. In a first example (see FIGs. 6-7), based on the event notification indicating that a probe response has been received, first processing layer 110 may perform block 230 based on metric information that is determined based on (i.e., derivable from) the probe response. In a second example (see FIG. 8), based on the event notification indicating that a congestion event has been detected, first processing layer 110 may perform block 230 based on the congestion event (e.g., a form of instruction/control signal to perform congestion control). Any additional and/or alternative approach for block 230 may be implemented.

At 250 in FIG. 2, first processing layer 110 may generate and send an instruction to second processing layer 120 to perform the adjustment to the packet forwarding parameter (see 150 in FIG. 1). As used herein, the term "instruction" may refer generally to a directive that specifies an action to be performed. Any suitable form of instruction may be used, such as invoking an application programming interface (API) call supported by second processing layer 120, etc.

At 260 in FIG. 2, second processing layer 120 may adjust *P* from a first value (*v*1) to a second value (v2) based on the instruction. In practice, block 260 may involve second processing layer 120 interacting with hardware layer 130 (see 160 in FIG. 1) to configure a component (e.g., hardware scheduler 133) to control packet forwarding towards physical network 104 based on the second value (v2). Hardware layer 130, which includes any suitable component(s), may be known as hardware engine, hardware pipeline, etc. In practice, the "component" may be hardware scheduler 133 that is configured to control packet forwarding towards physical network 104. The term "control" may refer generally to managing the allocation of resource(s) and/or timing associated with packet forwarding. For example, hardware scheduler 133 may manage the timing and/or order of packet transmissions based on a particular transmission rate and/or congestion window size, organize packets into queue(s), any combination thereof, etc. Here, the term "configure" may refer generally to sending instruction(s) or control signal(s) to the component. Although exemplified using hardware scheduler 133, it should be understood that a scheduler may be implemented using hardware, firmware, software or any combination thereof.

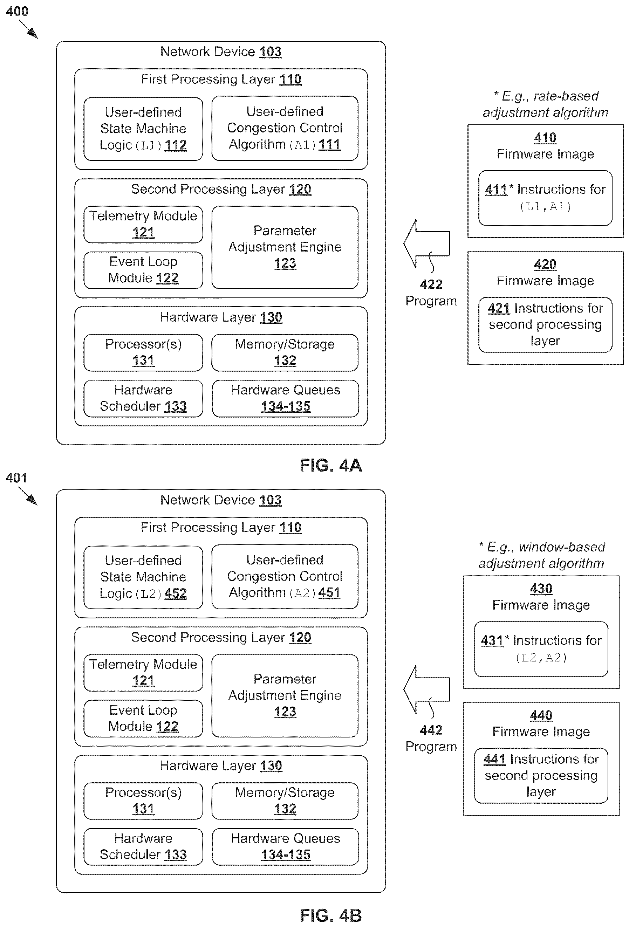

As used herein, the term "packet forwarding parameter" may refer generally to any suitable setting(s) for controlling the process of receiving and/or transmitting packets. In one example (to be described using FIG. 4A and FIG. 6), user-defined congestion control algorithm 111 may be a rate-based congestion control algorithm, in which case *P* may be a transmission (TX) rate associated with hardware scheduler 133. For example, *P* = TX rate may be reduced from *v*1 to *v*2 to reduce the amount of data being transmitted into physical network 104. See also 241 in FIG. 2.

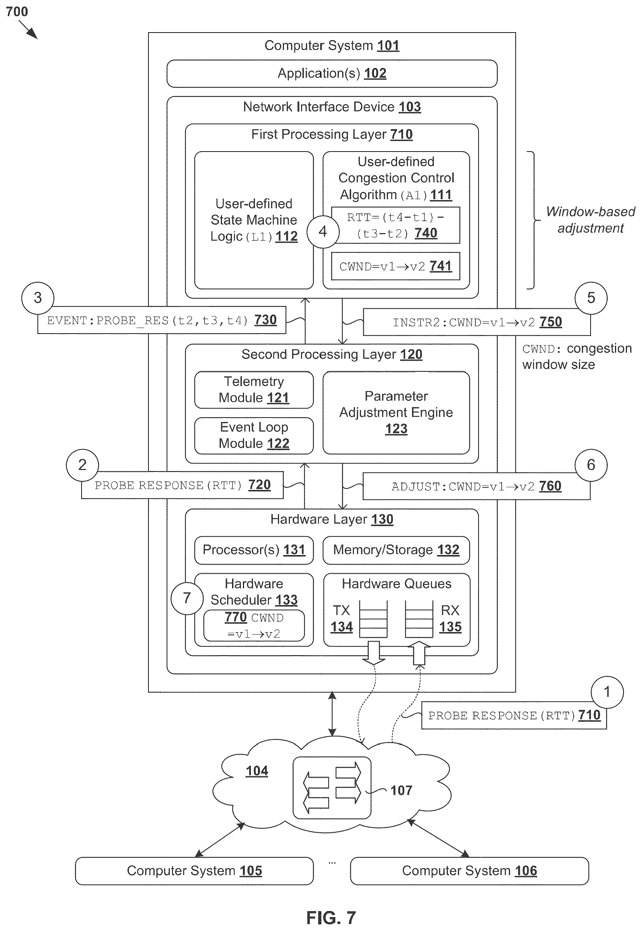

In another example (to be described using FIG. 4B and FIG. 7), user-defined congestion control algorithm 111 may be a window-based congestion control algorithm, in which case *P* may be a congestion window ("CWND") size associated with hardware scheduler 133. Here, *P* = congestion window size may be reduced to limit the number of outstanding (unacknowledged) packets that may be transmitted into physical network 104 within a given time period. See also 242 in FIG. 2. Any additional and/or alternative packet forwarding parameter(s) may be adjusted.

Using examples of the present disclosure, first processing layer 110 may be programmed to perform any suitable user-defined congestion control algorithm 111 that is customized for a particular network environment. This way, first processing layer 110 may be programmed to determine an adjustment to any suitable parameter(s) using any user-defined formula(s). Second processing layer 120 may be configured as an intermediary between first processing layer 110 and hardware layer 130 to perform, *inter alia,* parameter adjustment to support different congestion control algorithms. The flexibility to customize and adjust congestion control algorithm 111 provides several benefits. For example, it enables a network administrator to improve network performance based on traffic patterns and network conditions that are unique to network environment 100. This adaptability may also allow for responses to changing network demands and traffic characteristics over time, enhancing the overall reliability of robustness of network environment 100.

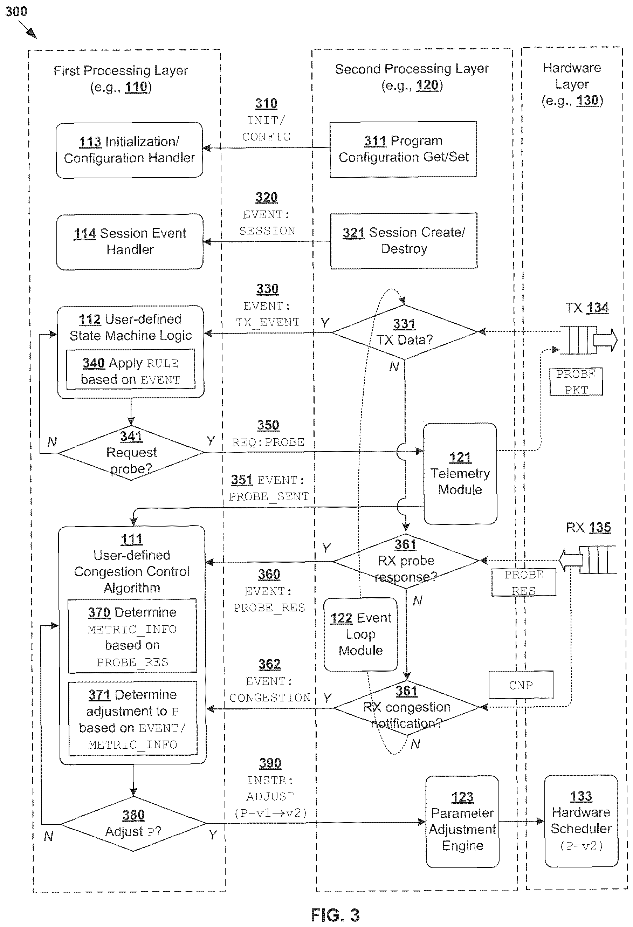

Further, using examples of the present disclosure, first processing layer 110 may be programmed to apply any user-defined state machine logic 112. As described using FIG. 11, user-defined state machine logic 112 may specify user-defined rule(s) for determining whether to perform an action (e.g., send probe packets to measure metric information) based on an input (e.g., event notification). The term "metric information" may refer generally to any suitable measurable quantity that provides insights into the performance, health, or state of a network. Example metric information may include round-trip time (RTT), latency, throughput, packet loss, jitter, bandwidth utilization, error rate, etc. The term "probe packet" may refer generally to a packet that is sent to measure metric information. Various examples will be discussed using FIGs. 3-10 below.

### Example programming of first processing layer

FIG. 3 is a flowchart of example detailed process 300 for network interface device 103 to perform congestion control in network environment 100. Example process 300 may include one or more operations, functions, or actions illustrated by one or more blocks, such as 310 to 390. Depending on the desired implementation, various blocks may be combined into fewer blocks, divided into additional blocks, and/or eliminated.

At 310 in FIG. 3, first processing layer 110 may be programmed to apply user-defined congestion control algorithm 111 and user-defined state machine logic 112. For example, user-defined congestion control algorithm 111 may determine how a packet forwarding parameter is adjusted. User-defined state machine logic 112 may specify one or more rules for determining whether a telemetry packet (e.g., probe packet) is required. The configuration of first processing layer 110 may be initiated using second processing layer 120, such as configuration get/set module 311 to interact with initialization/configuration handler 113 of first processing layer 110.

Any suitable programming language may be used to implement instructions or program code associated with algorithm 111 and/or state machine logic 112. Once generated, one or more firmware images that implement first processing layer 110 and second processing layer 120 may be loaded onto programmable NIC 103. In practice, the term "firmware image" may refer generally to a file (e.g., binary file) that includes low-level software required to control the NIC's hardware. The firmware image(s) may provide necessary instructions for processor 131 on NIC 103 to implement processing layer 110/120 according to examples of the present disclosure. Depending on the desired implementation, first and second processing layers 110-120 may be implemented using multiple firmware images (see FIGs. 4A-B), or a single firmware image (not shown).

A first example is shown in FIG. 4A, which is a schematic diagram illustrating a first example programming (see 400) of first processing layer 110 in FIG. 1. Here, first firmware image 410 may include instructions 411 that are executable by processor 131 to implement first processing layer 110, particularly first algorithm 111 (denoted as "A1") and first logic 112 (denoted as "L1"). Second firmware image 420 may include instructions 421 to implement second processing layer 120 to provide various supporting functions to first processing layer 110. During the programming process, first firmware image 410 and second firmware image 420 may then be loaded onto NIC 103 using any suitable firmware update approach (see 422).

A second example is shown in FIG. 4B, which is a schematic diagram illustrating a second example programming (see 401) of first processing layer 110 in FIG. 1. Here, third firmware image 430 may include instructions 431 that are executable by processor 131 to implement first processing layer 110, particularly second algorithm 451 (denoted as "A2") and second logic 452 (denoted as "L2"). Fourth firmware image 440 may further include instructions 441 to implement second processing layer 120. Firmware images 430-440 may be loaded onto NIC 103 using any suitable firmware update approach (see 442). Note that instructions 441 in fourth firmware image 440 may be the same as instructions 421 in second firmware image 420. Also, user-defined state machine logic 112/452 may be a software component that is separate from algorithm 111/451 (as shown in FIGs. 4A-B), or part of algorithm 111/451. When a user (e.g., network administrator) wishes to update user-defined algorithm 111/451 and/or logic 112/452, firmware image 410/430 associated with first processing layer 110 may be updated accordingly without modifying second processing layer 120.

Depending on the desired implementation, A1 111 may be a rate-based congestion control algorithm for detecting congestion based on metric information and adjusting parameter = TX rate to control congestion. Any suitable rate-based congestion control algorithm may be used. One example is TIMELY, which is a congestion control algorithm that relies on RTT information to adjust TX rate. TIMELY is explained in R. Mittal et al., "TIMELY: RTT-based Congestion Control for the Datacenter," Proceedings of the 2015 ACM Conference on Special Interest Group on Data Communication (SIGCOMM '15), London, United Kingdom, 2015, pp. 537-550, which is incorporated herein by reference.

Compared to A1 111, A2 451 may be a different rate-based congestion control algorithm, a window-based congestion control algorithm or any other algorithm. For example, SWIFT is a congestion control algorithm that relies on RTT information to adjust a congestion window size with a goal of maintaining packet delay around a target delay. SWIFT is explained in G. Kumar et al., "Swift: Delay is Simple and Effective for Congestion Control in the Datacenter," Proceedings of the Annual Conference of the ACM Special Interest Group on Data Communication (SIGCOMM '20), Virtual Event, USA, 2020, pp. 1-15, which is incorporated herein by reference.

Using a rate-based congestion control algorithm, the TX rate of a source (e.g., computer system 101) may be shaped according to a desired rate. This allows hardware scheduler 131 to transmit packets at a particular rate (e.g., constant fixed rate), similar to a leaky bucket approach. In contrast, a window-based congestion control algorithm may employ a congestion window to limit the number of outstanding (e.g., unacknowledged) packets a source may transmit within a given time period, which may result in a bursty packet transmission. A window-based algorithm may require hardware scheduler 133 to transmit packets based on a certain number of tokens, etc. Example congestion control algorithms will be explained using FIGs. 6-7.

First processing layer 110 may be programmed to apply any additional or alternative congestion control algorithm(s). One example is High Precision Congestion Control Plus (HPCC+), which is an advanced congestion control mechanism designed for high-speed, large-scale networks. It leverages INT to gather more precise, real-time link load information, enabling accurate flow rate adjustments. By utilizing this detailed telemetry data, HPCC+ may quickly converge to optimal bandwidth utilization while avoiding congestion and maintaining near-zero in-network queues, which is crucial for achieving ultra-low latency. This approach allows HPCC+ to deliver predictable transport performance, making it highly effective for applications requiring high throughput and low latency, such as datacenter networks.

Using examples of the present disclosure, second processing layer 120 may support different congestion control algorithms (e.g., A1 111 and A2 452) and state machine logic (e.g., L1 112 and L2 452). Examples of the present disclosure should be contrasted against conventional hardware-based approaches that rely on hardware logic to perform telemetry and rate adjustment based on static formula(s). The parameters used within a static formula may be configurable but the actual formula itself is usually immutable.

### Event-driven architecture

First processing layer 110 and second processing layer 120 may be configured to implement an event-driven architecture to handle various events relating to congestion control. This architecture allows first processing layer 110 to separate itself from the underlying hardware layer 130. Referring to FIG. 3 again, example events that may be detected include session events (see 320), traffic events (see 330), telemetry events (see 350-360), congestion events (see 362), etc.

Event loop module 122 of second processing layer 120 may be configured to monitor various events. An event may be detected based on hardware interrupt(s), hardware status register(s), firmware event(s), polling of hardware counter(s), queue(s), etc. Example hardware counters may include classification and forwarding architecture (CFA) flow counters for managing traffic flows, remote direct memory access (RDMA) over converged Ethernet (RoCE) counters, etc. In practice, RoCE is a network protocol that implements RDMA over an Ethernet network, which is used in data centers. Depending on the desired implementation, second processing layer 120 may send event notifications to first processing layer 110 via API call(s), a queueing mechanism, or a combination of thereof. Each event notification may include timestamp information associated with an event detected. Various events will be described below.

### (a) Session events

At 320 in FIG. 3, session events may include session creation and deletion events. Here, the term "session" or "network session" may refer to a connection between two endpoints. For example, in response to detecting that a session has been created by application 102, second processing layer 120 may generate and send an event notification identifying a session creation event to session event handler 114. Based on the event notification, first processing layer 110 may store session context information, such as session state, tuple information associated with the session, etc. The tuple information (e.g., source/destination address information, source/destination port number, protocol) may be used for probe packet generation.

In response to detecting that a session has been deleted by application 102, second processing layer 120 may generate and send an event notification identifying a session deletion event to session event handler 114. Session events may be stored in a datastore (not shown) maintained by second processing layer 120. Based on the event notification, first processing layer 110 may delete any session context information associated with the session.

### (b) Traffic events

At 330-331 in FIG. 3, second processing layer 120 may generate and send an event notification identifying a traffic event to first processing layer 110. The term "traffic event" may refer generally to any suitable event relating to packet forwarding. One example traffic event is a TX event (shown in FIG. 3), which specifies the amount of data (e.g., accumulated byte count) that has been transmitted by NIC 103 since the last TX event notification. Another example is an acknowledgement (ACK) RX event (not shown), which specifies the amount of data (e.g., in bytes) that has been acknowledged by recipient(s) since the last event notification.

Depending on the desired implementation, second processing layer 120 may monitor hardware layer 130, including TX queue 134, to determine whether the amount of data transmitted/acknowledged exceeds a configurable threshold. If yes (i.e., threshold exceeded), event loop module 122 of second processing layer 120 may generate and send a traffic event notification to first processing layer 110. Any additional and/or alternative traffic event(s) may be monitored.

### (c) Telemetry events

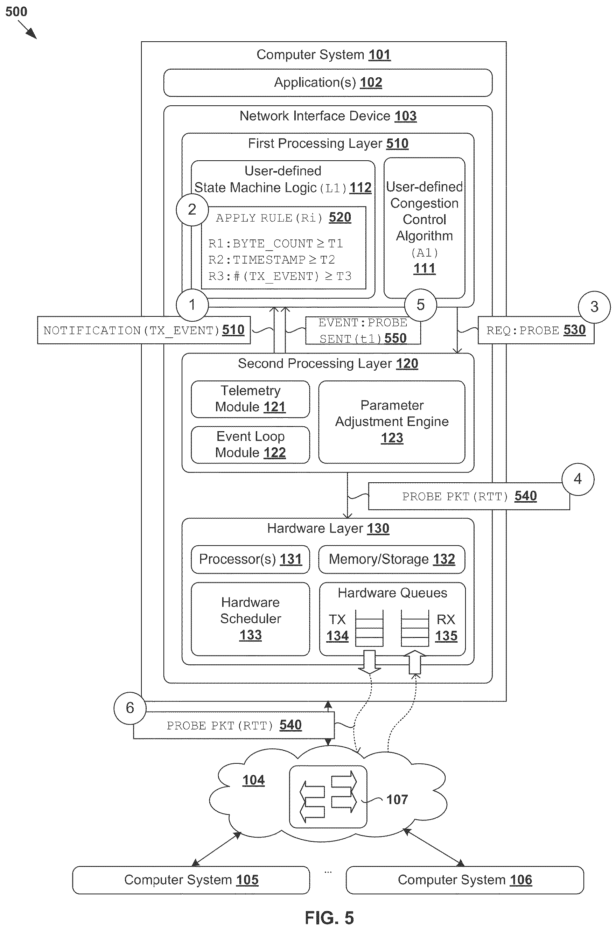

Block 330-350 will be described using an example in FIG. 5, which is a schematic diagram illustrating first processing layer 110 applying user-defined rule(s) to determine whether to send a probe packet. At 510 in FIG. 5, first processing layer 110 may receive an event notification identifying a TX event (described above) associated with a session. In response, user-defined state machine logic 112 may be applied to determine whether a probe packet is required for the session. See also 340 in FIG. 3.

Some example rules are shown in FIG. 5. Note that one or more rules may be applied. In a first example, user-defined state machine logic 112 may extract an amount of accumulated byte count from TX event notification 510 and apply a first rule (see "R1" in FIG. 5) to determine whether the accumulated byte count ≥ first threshold (T1). If yes (i.e., R1 satisfied), it is determined that a probe packet is required. Otherwise, a probe packet is not required.

In a second example, user-defined state machine logic 112 may extract timestamp information associated with TX event notification 510 and apply a second rule (see "R2") to determine whether the timestamp information ≥ second threshold (T2). For example, T2 may be a user-defined threshold specifying the time elapsed since the last probe packet is sent. If yes (i.e., R2 satisfied), it is determined that a probe packet is required. Otherwise, a probe packet is not required.

In a third example, user-defined state machine logic 112 may determine the number of TX events that have been received within a pre-configured time period based on TX event notification 510 and other previous notifications. In this case, user-defined state machine logic 112 may apply a third rule (see "R3") to determine whether the number of TX events ≥ third threshold (T3). If yes (i.e., R3 satisfied), it is determined that a probe packet is required. Otherwise, a probe packet is not required. Any additional and/or alternative rule(s) may be defined and applied.

At 530 in FIG. 5, in response to determination that one or more rules are satisfied, user-defined state machine logic 112 may determine that a probe packet is required. In this case, user-defined state machine logic 112 may generate and send a request (denoted as "REQ: PROBE" in FIG. 5) towards second processing layer 120 to request for a probe packet to be sent to a destination (i.e., probe packet responder) associated with a session. Otherwise, no probe packet is requested. The request may be sent using any suitable approach, such as first processing layer 110 invoking an API call to cause second processing layer 120 to generate and send a probe packet.

At 540 in FIG. 5, based on the request, telemetry module 121 of second processing layer 120 may generate and send a probe packet towards a destination. Probe packet 540 may be placed in TX queue 134 before being forwarded towards physical network 104. In the example in FIG. 5, probe packet 540 may be sent to measure metric information = RTT, etc. In practice, RTT may refer generally to the duration (e.g., in milliseconds) for a packet to travel from a source (e.g., first computer system 101) to a destination (e.g., second computer system 105/106) and back again, providing insights into network latency and performance.

At 550 in FIG. 5, once probe packet 540 has been sent, telemetry module 121 may generate an event notification to first processing layer 110 to report that probe packet 540 has been sent at TX time = *t*1. The TX time may be reported as soon as probe packet 540 has been sent to the wire to exclude any latency at TX queue 134 that might be padded onto the RTT calculation.

### First example: rate-based congestion control algorithm

Blocks 360-390 in FIG. 3 will be explained using FIG. 6, which is a schematic diagram illustrating a first example (see 700) of user-defined congestion control algorithm 111 that first processing layer 110 is programmable to apply. In this example, A1 111 may be a rate-based congestion control algorithm.

At 610-620 in FIG. 6, telemetry module 121 may receive a probe response via RX queue 135. Any suitable format may be used for probe packet 540 and probe response 610, such as management datagram (MAD) format, in-band flow analyzer (IFA) format, etc. For example, MAD is defined by the InfiniBand architecture, which is a high-performance networking standard for high-performance computing (HPC) environments, data centers and enterprise networks. In practice, MAD-based network probes (e.g., 256-byte messages) may be used to collect metric information about physical network 104 by exchanging probe packets between an initiator (e.g., computer system 101) and a responder (e.g., computer system 105/106). In another example, IFA allows predefined and custom telemetry information (i.e., metadata) to be inserted and collected on a per-hop basis. Metadata that includes timestamp information inserted by the responder may be used for RTT calculations.

At 630 in FIG. 6, in response to receiving a probe response via RX queue 135, telemetry module 121 may generate and send an event notification (denoted as "EVENT: PROBE_RES") towards first processing layer 110. Event notification 630 may indicate that a telemetry event has occurred, particularly the reception of probe response 610. Further, event notification 630 may specify (*t*2*, t*3*, t*4) for first processing layer 110 to perform RTT calculations. Here, *t*2 = RX time of probe packet 540 at the responder, *t*3 = TX time of probe response 610 at the responder and *t*4 = RX time of probe response 610 at the initiator. See 360 and 361 (yes) in FIG. 3.

At 640-641 in FIG. 6, in response to determination that congestion control is required, first processing layer 110 may apply A1 111 to determine an adjustment to parameter = TX rate associated with TX queue 134. For example (see 640), A1 111 may be performed to determine metric information = RTT based on (*t*1*, t*2*, t*3*, t*4) discussed above, such as by applying formula RTT = (*t*4 - *t*1) - (*t*3 - *t*2)*,* etc. Additionally (see 641), first processing layer 110 may determine whether congestion control is required, such as by comparing the calculated RTT, or a derived value, with user-defined threshold(s).

For example, the TIMELY algorithm (discussed above) may be applied to monitor RTT for inferring network congestion levels. In response to determination that RTT < user-defined low threshold (*T_{low}*), an adjustment may be calculated to increase the TX rate. In response to determination that RTT > user-defined high threshold (*T_{high}*) and congestion control is required, an adjustment may be calculated to reduce the TX rate. Additionally, a delay gradient value, which represents a derivative of queueing with respect to time, may be calculated based on the current RTT and previous RTT calculation(s). In response to determination that the delay gradient value ≤ 0 (i.e., negative gradient value indicating that RTT is decreasing), an adjustment may be calculated to increase the TX rate to utilize the available bandwidth more effectively. Otherwise (i.e., positive gradient value indicating that RTT is increasing and congestion control is required), an adjustment may be calculated to reduce the TX rate to reduce the load on physical network 104. Any suitable user-defined formula(s) may be used to calculate a specific adjustment from a first value (*v*1) to a second value (*v*2). See also 370-371 in FIG. 3.

At 650 in FIG. 6, first processing layer 110 may generate and send an instruction (denoted as "INSTR") towards second processing layer 120 to cause parameter adjustment engine 123 to perform the adjustment. At 660-670 in FIG. 6, parameter adjustment engine 123 may configure hardware layer 130, particularly hardware scheduler 133, to update the TX rate from *v*1 to *v*2. Depending on the desired implementation, the configuration may be performed using any suitable hardware-readable instruction(s), control signal(s), etc. See also 380-390 in FIG. 3.

### Second example: window-based congestion control algorithm

FIG. 7 is a schematic diagram illustrating a second example (see 700) of user-defined congestion control algorithm 451 that first processing layer 110 is programmable to apply. FIG. 7 will be explained using second congestion control algorithm (A2) 451 and second state machine logic (L2) 452 in FIG. 4B. In this example, A2 451 may be a window-based congestion control algorithm to adjust a packet forwarding parameter in the form of congestion window (CWND) size.

At 710-730 in FIG. 7, in response to receiving a probe response via RX queue 135, telemetry module 121 may generate and send an event notification (denoted as "EVENT: PROBE_RES") towards first processing layer 110. Event notification 730 may indicate the reception of probe response 710. Event notification 730 may specify (*t*2*, t*3*, t*4) for first processing layer 110 to perform RTT calculations. Similar to the example in FIG. 6, *t*2 = RX time of probe packet 540 at the responder, *t*3 = TX time of probe response 710 at the responder and *t*4 = RX time of probe response 710 at the initiator. See 360 and 361 (yes) in FIG. 3.

At 740-741 in FIG. 7, in response to determination that congestion control is required, first processing layer 110 may apply A2 451 to determine an adjustment to parameter = CWND. For example (see 740), metric information = RTT may be calculated based on (*t*1, *t*2, *t*3, *t*4), such as RTT = (*t*4 - *t*1) - (*t*3 - *t*2)*,* etc. Additionally (see 741), based on the RTT, first processing layer 110 may determine whether congestion control is required, such as by comparing RTT, or a derived value, with user-defined threshold(s).

For example, the SWIFT algorithm (discussed above) may be applied to monitor RTT to detect congestion. In response to determination that the measured RTT > threshold (i.e., target RTT), first processing layer 110 may apply the SWIFT algorithm determine that congestion control is required. In this case, an adjustment may be determined to decrease the CWND from a first value (*v*1) to a second value (*v*2), such as in a multiplicative manner, etc. Conversely, in response to determination that the measured RTT ≤ threshold (i.e., target RTT), first processing layer 110 may apply the SWIFT algorithm determine that congestion control is not required. In this case, an adjustment may be determined to increase the CWND additively. This approach is known as additive increase multiplicative decrease (AIMD).

At 750 in FIG. 7, first processing layer 110 may generate and send an instruction (denoted as "INSTR") towards second processing layer 120 to cause parameter adjustment engine 123 to perform the adjustment. At 760-770 in FIG. 7, parameter adjustment engine 123 may configure hardware layer 130, particularly hardware scheduler 133, to update the CWND from *v*1 to *v*2. For example, *v*2 < *v*1 to reduce the amount of data being forwarded towards physical network 104 as a measure of congestion control. See also 380-390 in FIG. 3.

Examples of the present disclosure may leverage the ability of hardware layer 130 to send and receive probe packets from which processor 131 (e.g., eCPU) and its ability to adjust packet forwarding parameter(s). Being a software solution, the logic and mathematical computations behind a particular congestion control algorithm may be mutable. This allows the congestion control algorithm to utilize different telemetry schemes and different parameter adjustment calculations to react to congestion.

### Congestion control granularity

Depending on the desired implementation, any suitable congestion control granularity may be implemented by congestion control algorithm 111/451, such as per-destination, per-QP (queue pair), per-path, etc. A queue pair includes a send queue and a receive queue to manage communication between two endpoints in a network session. The per-destination congestion control granularity refers to the ability to manage congestion for one or more QPs heading towards the same destination, such as a destination Internet Protocol (IP) address, etc. The per-QP congestion control granularity refers to the ability to manage congestion for each QP individually regardless of the destination. In this mode, a session may be created upon the creation of each QP.

The per-path congestion control granularity also refers to the ability to manage congestion for each QP individually regardless of the destination. It is a middle-ground solution regarding scale and granularity between the per-destination and the per-QP configuration. The creation of a session for the per-path granularity would base not only on the destination IP address, but also tuple information associated with a path. In practice, tuple information associated with a path may include source IP address, destination IP address, source port number, destination port number and protocol information. In this mode, if a source node has multiple paths to traverse to the destination node, each path may independently be probed, and rate adjusted.

### Third example: congestion events

Referring to FIG. 3 again, at 362, event loop module 122 of second processing layer 120 may generate and send event notifications relating to congestion events to first processing layer 110. Here, the term "congestion event" may refer generally to any event that is triggered by the detection of congestion, such as based on any suitable congestion condition(s) or performance issue(s). For example, when a session experiences congestion, one of the following congestion events may be generated by event loop module 122: RTO events, sequence error NAK events, CNP events, etc.

Some examples are shown in FIG. 8 is a schematic diagram illustrating an example (see 800) of user-defined congestion control algorithm 801 that first processing layer 110 is programmable to apply. In practice, an RTO event associated with a session may be generated in response to event loop module 122 determining that an RTO condition is satisfied. This may occur whenever a packet heading towards a destination has been dropped, in which case an ACK response is expected but not received before a timeout is triggered. The RTO condition may be configured at any suitable granularity, such as for a QP connection. See 830 in FIG. 8.

A sequence error negative acknowledgement (NAK) event associated with a session may be generated in response to event loop module 122 determining that an out-of-sequence condition is satisfied. This may occur whenever a packet heading towards a destination has been dropped, in which case a data packet received is not in sequence (e.g., sequence number does not match an expected number). This causes the destination to send a packet indicating the error to the source (i.e., computer system 101). The sequence error NAK events may be detected for any QPs belonging to a session. See 810-830 in FIG. 8.

A CNP event may be generated in response to event loop module 122 detecting that a CNP packet has been received. CNP events indicate that a path connecting computer system 101 with a destination is experiencing congestion. This may occur when an intermediate network device (e.g., switch) along the path has marked an ECN field in some packets. When the ECN-marked packets are received, the destination may feedback to computer system 101 using a CNP packet to indicate congestion. The CNP events may be detected for any QPs belonging to a session. See 810-830 in FIG. 8.

At 371 in FIG. 3, in response to receiving an event notification indicating a congestion event, first processing layer 110 may determine an adjustment to a packet forwarding parameter from a first value (*v*1) to a second value (*v*2). Using TX rate as an example, rate reduction may be performed based on the RTO event and/or sequence error NAK event. Rate reduction may also be performed based on the CNP event, such as when the CNP packet is received after probe packet 540 is sent, etc. Any suitable user-defined formula(s) may be used to calculate the adjustment. See 840-870 in FIG. 8.

### Example network environment for AI applications

Examples of the present disclosure may be implemented in any suitable network environment, such as to support any AI applications, etc. One example is shown in FIG. 9, which a schematic diagram illustrating example distributed training environment 900 in which network interface device 103 may be deployed to perform congestion control. Here, the term "distributed training environment" may refer generally to a network environment in which workload associated with training a model may be distributed among multiple worker nodes. In practice, distributed training may be performed to improve speed (i.e., training times), scalability (e.g., easier handling of large datasets and complex models) and efficiency (e.g., better utilization of computational resources) during training. Although not shown in FIG. 9, examples of the present disclosure may be implemented to support inference using AI model(s).

In the example in FIG. 9, a cluster of multiple (*N*) worker nodes 911-91*N* may be deployed in distributed training environment 900 to perform distributed training. For example, first worker node 911 running on computer system 101 may be configured to train model 921 based on dataset 931. Second worker node 912 may be configured to train model 922 based on dataset 932. Similarly, *N^{th}* worker node 91*N* may be configured to train model 92N based on dataset 93N. As used herein, the term "worker node" may refer generally to a computing resource that is capable of performing task(s) relating to model training. In practice, worker nodes 911-91*N* may be equipped with one or more accelerators to accelerate the computation of training tasks, such as graphics processing units (GPUs), tensor processing units (TPUs), etc. A "worker node" may be referred to as a "compute node," "training node," "processing node," "compute resource," "GPU node" (if equipped with GPU), etc. In another example, training may be performed by any suitable software and/or hardware component(s) of computer system 101.

In practice, distributed training environment 900 may implement any suitable parallelism strategy to scale training across multiple worker nodes, such as data parallelism, model parallelism, or a combination of both (i.e., hybrid parallelism), etc. For example, using data parallelism, worker nodes 911-91*N* may each train a copy or replica of the same model (see 921-92*N*) using different datasets 931-93N. This way, a large dataset may be divided into smaller chunks 931-93N such that each chunk may be processed independently by a different worker node. In another example, using model parallelism, a model may be split into multiple parts (also 921-92N), each of which is trained using a different worker node. This is especially useful when the model is too large to fit into the memory of a single node. Using hybrid parallelism, a combination of data and model parallelism may be implemented to leverage the advantages of both.

The term "model" may refer generally to a mathematical representation or algorithm that may be trained in distributed training environment 900 to make predictions or decisions based on input data. In the example in FIG. 9, an AI model (see 921-92*N*) may be trained in a distributed manner, such as a machine learning (ML) model, deep learning model, etc. In general, deep learning is a subset of machine learning in which multi-layered neural networks may be used for feature extraction as well as pattern analysis and/or classification. The term "deep" in deep learning generally refers to the number of layers in the neural network. For example, compared to shallow learning models, deep learning models may have dozens or even hundreds of layers. This allows deep learning models to extract more complex and nuanced features from input data, leading to more accurate output data. Although described using AI model(s), it should be understood non-AI model(s) may be trained, such as linear regression model, decision tree, random forest, etc.

During training, worker node 911/912/91 *N* may process dataset 931/932/93 *N* to generate model information associated with model 921/922/92*N*. Here, the term "model information" may refer generally to any suitable information generated by a worker node in the process of training a model. For example, the model information may include gradient coordinate values (also referred to as "gradients" and "gradient vector") or parameters associated with model 921/922/92N. In practice, gradients may represent the direction and rate of change in a model's parameters (e.g., weights) with respect to the loss function. As such, gradients may indicate how much the model's predictions deviate from actual values, guiding the learning process to minimize the error. Using data parallelism, each worker node 911/912/91N may compute model information based on its dataset 931/932/93N (e.g., one or more chunks of a larger dataset).

In practice, distributed training of AI models requires a significant amount of data transfer over physical network 104, such as for data synchronization during training. Examples of the present disclosure may be implemented to facilitate customization of congestion control that supports the unique demands and characteristics of distributed training environment 900, such as low latency, high bandwidth, etc. In the example in FIG. 9, computer system 101 may include network interface device 103 to perform congestion control for first worker node 911. Congestion control algorithm 111/451 and state machine logic 112/452 may be defined to support more efficient data transfer between first worker node 911 and another worker node 912/91N, thereby reducing training times and improving overall system performance.

### Software-defined networking (SDN) environment

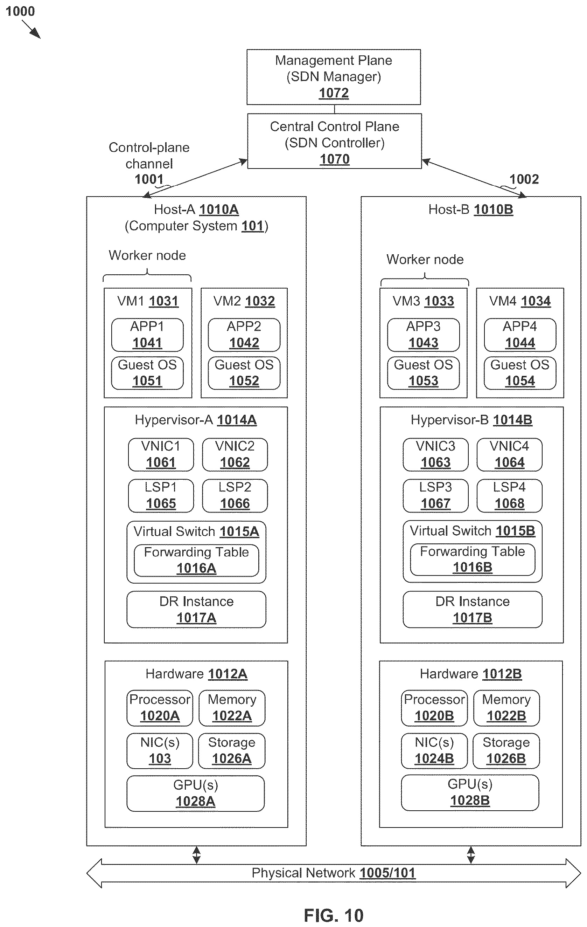

Depending on the desired implementation, computer system 101 may be a host deployed in a software-defined networking (SDN) environment, such as a public or private cloud environment, etc. One example will be described using FIG. 10, which is a schematic diagram illustrating example SDN environment 1000 in which congestion control may be implemented. In this example, SDN environment 1000 may include any suitable number of hosts, such as host-A 1010A and host 1010B. In practice, worker nodes 911-912 in FIG. 9 may be implemented using virtualized computing instances in the form of virtual machines (VMs), containers, etc.

Host 1010A/1010B may include suitable hardware 1012A/1012B and virtualization software (e.g., hypervisor-A 1014A, hypervisor-B 1014B) to support various VMs. For example, host-A 1010A may support VM1 1031 and VM2 1032, while VM3 1033 and VM4 1034 are supported by host-B 1010B. Hardware 1012A/1012B includes suitable physical components, such as central processing unit(s) (CPU(s)) or processor(s) 1020A/1020B; memory 1022A/1022B; physical network interface controllers (PNICs) 1024A/1024B; storage disk(s) 1026A/1026B; GPUs 1028A/1028B etc.

Hypervisor 1014A/1014B maintains a mapping between underlying hardware 1012A/1012B and virtual resources allocated to respective VMs. Virtual resources are allocated to respective VMs 1031-1034 to support a guest operating system and application(s); see 1041-1044, 1051-1054. For example, the virtual resources may include virtual CPU, guest physical memory, virtual disk, virtual network interface controller (VNIC), etc. Hardware resources may be emulated using virtual machine monitors (VMMs). For example in FIG. 10, VNICs 1061-1064 are virtual network adapters for VMs 1031-1034, respectively, and are emulated by corresponding VMMs (not shown) instantiated by their respective hypervisor at respective host-A 1010A and host-B 1010B. The VMMs may be considered as part of respective VMs, or alternatively, separated from the VMs. Although one-to-one relationships are shown, one VM may be associated with multiple VNICs (each VNIC having its own network address).

Although examples of the present disclosure refer to VMs, it should be understood that a "virtual machine" running on a host is merely one example of a "virtualized computing instance" or "workload." A virtualized computing instance may represent an addressable data compute node (DCN) or isolated user space instance. In practice, any suitable technology may be used to provide isolated user space instances, not just hardware virtualization. Other virtualized computing instances may include containers (e.g., running within a VM or on top of a host operating system without the need for a hypervisor or separate operating system or implemented as an operating system level virtualization), virtual private servers, client computers, etc. Such container technology is available from, among others, Docker, Inc. The VMs may also be complete computational environments, containing virtual equivalents of the hardware and software components of a physical computing system. Depending on the desired implementation, examples of the present disclosure may also leverage any suitable serverless computing technology. One example is function-as-a-service (FaaS), which allows developers to execute code (e.g., in response to events) without having to manage the underlying cloud infrastructure. Another example is serverless GPU (also known as accelerator-as-a-service), which allows developers to access powerful GPU resources for their applications.

The term "hypervisor" may refer generally to a software layer or component that supports the execution of multiple virtualized computing instances, including system-level software in guest VMs that supports namespace containers such as Docker, etc. Hypervisors 1014A-B may each implement any suitable virtualization technology, such as VMware ESX^{®} or ESXi^{™} (available from VMware LLC), Kernel-based Virtual Machine (KVM), etc. The term "packet" may refer generally to a group of bits that can be transported together, and may be in another form, such as "frame," "message," "segment," etc. The term "traffic" or "flow" may refer generally to multiple packets. The term "layer-2" may refer generally to a link layer or media access control (MAC) layer; "layer-3" a network or Internet Protocol (IP) layer; and "layer-4" a transport layer (e.g., using Transmission Control Protocol (TCP), User Datagram Protocol (UDP), etc.), in the Open System Interconnection (OSI) model, although the concepts described herein may be used with other networking models.

SDN controller 1070 and SDN manager 1072 are example network management entities in SDN environment 100. One example of an SDN controller is the NSX controller component of VMware NSX^{®} (available from VMware LLC) that operates on a central control plane. SDN controller 1070 may be a member of a controller cluster (not shown for simplicity) that is configurable using SDN manager 1072. Network management entity 1070/1072 may be implemented using physical machine(s), VM(s), or both. To send or receive control information, a local control plane (LCP) agent (not shown) on host 1010A/1010B may interact with SDN controller 1070 via control-plane channel 1001/1002.

Through virtualization of networking services in SDN environment 100, logical networks (also referred to as overlay networks or logical overlay networks) may be provisioned, changed, stored, deleted and restored programmatically without having to reconfigure the underlying physical hardware architecture. Hypervisor 1014A/1014B implements virtual switch 1015A/1015B and logical distributed router (DR) instance 1017A/1017B to handle egress packets from, and ingress packets to, VMs 1031-1034. In SDN environment 100, logical switches and logical DRs may be implemented in a distributed manner and can span multiple hosts.

For example, a logical switch (LS) may be deployed to provide logical layer-10 connectivity (i.e., an overlay network) to VMs 1031-1034. A logical switch may be implemented collectively by virtual switches 1015A-B and represented internally using forwarding tables 1016A-B at respective virtual switches 1015A-B. Forwarding tables 1016A-B may each include entries that collectively implement the respective logical switches. Further, logical DRs that provide logical layer-3 connectivity may be implemented collectively by DR instances 1017A-B and represented internally using routing tables (not shown) at respective DR instances 1017A-B. Each routing table may include entries that collectively implement the respective logical DRs.

Packets may be received from, or sent to, each VM via an associated logical port. For example, logical switch ports 1065-1068 (labelled "LSP1" to "LSP4") are associated with respective VMs 1031-1034. Here, the term "logical port" or "logical switch port" may refer generally to a port on a logical switch to which a virtualized computing instance is connected. A "logical switch" may refer generally to a software-defined networking (SDN) construct that is collectively implemented by virtual switches 1015A-B, whereas a "virtual switch" may refer generally to a software switch or software implementation of a physical switch. In practice, there is usually a one-to-one mapping between a logical port on a logical switch and a virtual port on virtual switch 1015A/1015B. However, the mapping may change in some scenarios, such as when the logical port is mapped to a different virtual port on a different virtual switch after migration of the corresponding virtualized computing instance (e.g., when the source host and destination host do not have a distributed virtual switch spanning them).

A logical overlay network may be formed using any suitable tunneling protocol, such as Virtual eXtensible Local Area Network (VXLAN), Stateless Transport Tunneling (STT), Generic Network Virtualization Encapsulation (GENEVE), Generic Routing Encapsulation (GRE), etc. For example, VXLAN is a layer-2 overlay scheme on a layer-3 network that uses tunnel encapsulation to extend layer-2 segments across multiple hosts which may reside on different physical networks. Hypervisor 1014A/1014B may implement virtual tunnel endpoint (VTEP) 1019A/1019B to encapsulate and decapsulate packets with an outer header (also known as a tunnel header) identifying the relevant logical overlay network (e.g., VNI). Hosts 1010A-B may maintain data-plane connectivity with each other via physical network 1005 to facilitate east-west communication among VMs 1031-1034.

### Computer system

The above examples may be implemented by hardware (including hardware logic circuitry), software or firmware or a combination thereof. The above examples may be implemented by any suitable computing device, computer system, etc. The computer system may include processor(s), memory unit(s) and physical NIC(s) that may communicate with each other via a communication bus, etc. The computer system may include a non-transitory computer-readable medium having stored thereon instructions or program code that, when executed by the processor, cause the processor to perform processes described herein with reference to the drawings.

The techniques introduced above may be implemented in special-purpose hardwired circuitry, in software and/or firmware in conjunction with programmable circuitry, or any combination thereof. Special-purpose hardwired circuitry may be in the form of, for example, one or more ASICs, PLDs, FPGAs, etc. The term 'processor' is to be interpreted broadly to include a processing unit, ASIC, logic unit, or programmable gate array etc.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples may be implemented, individually and/or collectively, by a wide range of hardware, software, firmware, or any combination thereof.

Those skilled in the art will recognize that some aspects of the embodiments disclosed herein, in whole or in part, may be equivalently implemented in integrated circuits, as one or more computer programs running on one or more computers (e.g., as one or more programs running on one or more computing systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure.

Software and/or to implement the techniques introduced here may be stored on a non-transitory computer-readable storage medium and may be executed by one or more general-purpose or special-purpose programmable microprocessors. A "computer-readable storage medium", as the term is used herein, includes any mechanism that provides (i.e., stores and/or transmits) information in a form accessible by a machine (e.g., a computer, network device, personal digital assistant (PDA), mobile device, manufacturing tool, any device with a set of one or more processors, etc.). A computer-readable storage medium may include recordable/non recordable media (e.g., read-only memory (ROM), random access memory (RAM), magnetic disk or optical storage media, flash memory devices, etc.).

The drawings are only illustrations of an example, wherein the units or procedure shown in the drawings are not necessarily essential for implementing the present disclosure. Those skilled in the art will understand that the units in the device in the examples may be arranged in the device in the examples as described or may be alternatively located in one or more devices different from that in the examples. The units in the examples described may be combined into one module or further divided into a plurality of sub-units.

## Claims

1. A method for a network interface device to perform congestion control, wherein the network interface device includes a first processing layer and a second processing layer and the method comprises:
receiving, by the first processing layer, an event notification from the second processing layer;
in response to the first processing layer determining that congestion control is required based on the event notification,
determining, by the first processing layer, an adjustment to a packet forwarding parameter from a first value to a second value by applying a congestion control algorithm, wherein the congestion control algorithm is one of multiple congestion control algorithms that the first processing layer is programmable to apply;
generating and sending, by the first processing layer, an instruction to the second processing layer to perform the adjustment; and
based on the instruction, configure, by the second processing layer, a component of the network interface device to control packet forwarding towards a physical network based on the second value of the packet forwarding parameter.

2. The method of claim 1, wherein determining that congestion control is required comprises:
determining, by the first processing layer, metric information associated with packet forwarding based on the event notification indicating that a probe response has been received via the second processing layer; and
determining, by the first processing layer, that congestion control is required based on the metric information.

3. The method of claim 2, wherein the method further comprises:
prior to receiving the event notification, determining, by the first processing layer, whether a probe packet is required based on one or more user-defined rules that the first processing layer is programmable to apply; and
in response to determination that a probe packet is required, generating and sending, by the first processing layer, a request to the second processing layer to send the probe packet towards a receptor that is capable of sending the probe response.

4. The method of any one of the claims 1 to 3, wherein determining the adjustment comprises:
determining, by the first processing layer, the adjustment to the packet forwarding parameter in the form of a transmission rate, wherein the congestion control algorithm is a rate-based congestion control algorithm.

5. The method of any one of the claims 1 to 4, wherein determining the adjustment comprises:
determining, by the first processing layer, the adjustment to the packet forwarding parameter in the form of a congestion window size, wherein the congestion control algorithm is a window-based congestion control algorithm.

6. The method of any one of the claims 1 to 5, wherein determining that congestion control is required comprises:
determining, by the first processing layer, that congestion control is required based on the event notification indicating that the second processing layer has detected at least one of the following events: a retransmission timeout (RTO) event, a sequence error negative acknowledgement (NAK) event, and a congestion notification point (CNP) event.

7. The method of any one of the claims 1 to 6, wherein configuring the component comprises:
configuring, by the second processing layer, the component in the form of a hardware scheduler, the second processing layer acting as an intermediary between the first processing layer and the hardware scheduler.

8. A network interface device, comprising:
a processor; and
a non-transitory computer-readable medium having stored thereon instructions that, when executed by the processor, cause the processor to control and/or carry out a method as set forth in any one of the claims 1 to 7.

9. A non-transitory computer-readable storage medium that includes a set of instructions which, in response to execution by a processor of a network interface device, cause the processor to control and/or carry out a method as set forth in any one of the claims 1 to 7.
